# EUROPEAN PATENT APPLICATION

(11) **EP 1 965 575 A1**
(43) Date of publication of application: **03.09.2008**
(21) Application number: 07300840.1
(22) Date of filing: 01.03.2007
(51) Int. Cl.: H04M 3/42

(54) **Secure equipment and method of processing an emergency call in a telecommunication network**

(71) Applicant: Alcatel Lucent, 75008 Paris (FR)
(72) Inventor: Ansiaux, Arnaud, 91620 Nozay (FR)
(74) Representative: Schneider, Sandra

(57) **Abstract**

The present invention relates to a method of processing an emergency call in a telecommunication network (10), a secure equipment (100) performing the method and a telecommunication network (10) comprising said secure equipment (100). The invention further relates to a network agent (120) in a telecommunication network (10) providing additional information relating to an individual (22) making an emergency call and relating to the location of an emergency call.
More specifically present application relates to the case that when an emergency call is initiated a process is invoked to determine all personal information pertaining to the calling person (examples given name, date of birth) and the present location of the caller. This information can be provided to public authorities or a dispatch centre such that ambulances can be dispatched to the specified location. Also mentions recording of the distress call. Detecting abnormal call peaks from a location, for example in case of a terrorist attack, natural disaster and then listening in to conversations coming from the same location so as to determine the cause for the call peak, such that global security activities can be undertaken. Eavesdropping by public authorities depending on origination of call.

## Description

### BACKGROUND OF THE INVENTION

The present invention relates to a method of processing an emergency call and of insuring continuity of an emergency call in a telecommunication network. The invention further relates to a secure equipment performing a method of processing an emergency call and a telecommunication network comprising the secure equipment. The invention further relates to a network agent in a telecommunication network providing information for processing an emergency call.

In US Patent Application US 2006/0168185 A1 an emergency management and disaster response information system is described. In the system, information from a plurality of sources various kinds of data are collected about a current event. The collected data is analyzed and associated to provide a complete picture of an event.

In US Patent Application US 2005/0048988 A1 an apparatus and a method are presented to locate a telecommunication terminal that has placed an emergency call.

In the document WO 2005/077054 A2 a method is presented for locating an emergency call that has been placed from a telephone device being connected to a data network. The call is routed to an emergency service that handles the emergency calls for the region of the physical location of the device from which the emergency call has been placed.

### OBJECT OF THE INVENTION

The object of the invention is to provide a method in a telecommunication network to properly react to emergency calls, which are placed due to critical situations or events, especially personal events, in special contexts. Another object of the invention is to provide a secure equipment and at least one network agent for performing said method.

Telecommunications networks own a large amount of data about their users and about the environment where communication equipments are used. It is another object of the invention to provide a network agent in the telecommunication network providing additional information about the context of an emergency call.

### SUMMARY OF THE INVENTION

These objects and others that appear below are achieved by a method of processing an emergency call in a telecommunication network according to claim 1, a network agent in a telecommunication network according to claim 7, a secure equipment in a telecommunication network according to claim 8 and a telecommunication network according to claim 9.

According to a first aspect of the invention call routing and call identification information are retrieved and the emergency call is routed to a routing destination according to the retrieved call routing and call identification information. The routing destination of an emergency call could for example be an emergency call center. The routing is done through one or more networks, e. g. telecommunication networks, data networks etc.

Additionally, additional personal information is retrieved. Said additional personal information relates to the individual, which presumably has initiated the emergency call. The individual could be e. g. the owner of the portable equipment, the owner of the telephone number in a fixed access network or the person to which the subscriber identity module (SIM) card of a mobile phone is registered.

In addition, additional location information is retrieved. Additional location information relates to the location of the emergency call. The location of the emergency call can be the location from which the call has presumably originated. The additional location information could be geographic information about the cell from the call originated or in a fixed access network from the location where the call originated.

According to a preferred embodiment of the invention the additional personal information and additional location information is analyzed in the telecommunication network. After the analysis of the additional personal information and the additional location information a decision is taken in the telecommunication network about any further action to be taken.

In a preferred embodiment of the invention said action to be taken is intercepting one or more calls relating to said individual presumably having initiated the emergency call. Calls to be intercepted could be for example calls originating or terminating at a location close to the individual. Calls to be intercepted could also to be calls of persons or mobile equipments that have recently been called or that have called the individual presumably having initiated the emergency call. By this, calls of individuals or mobile equipments that have recently been involved with the individual in distress can be checked.

According to another embodiment of the invention said action to be taken is informing users of the telecommunication network. Users of the telecommunication network who are informed about the call are in a defined relation to the location of the emergency call, e. g. near the location of the emergency call. Users to be informed could for example be an ambulance or emergency center that is responsible for the location where the emergency call has originated. Users to be informed could also be users of mobile equipments that are in an area close to the location where the call originated. The informed users can come to aid the person in distress having placed the emergency call.

According to another embodiment of the invention said action to be taken is storing the entire emergency call. The entire emergency call to be stored comprises for example audio data of the emergency call but also ambient sound data that is received by the microphone of the mobile equipment used by the individual in distress and making the emergency call. The storage of the ambient sound data can be useful for later investigations to determine possible reasons of the distress. And also to build piece of evidence which are more and more necessary for further legal investigation.

According to a preferred embodiment of the invention said call routing and call identification information is analyzed. Said additional personal information and said additional location information is also analyzed and based on the analysis of call routing and call identification information and additional personal and additional location information it is decided which further information to retrieve. The further information relates to the individual presumably having initiated the emergency call and/or to the location where call originated. During this decision step a process is launched to determine if for example abnormal call peaks in the network are a consequence of a critical situation. In case of abnormal call peaks in the network it is for example decided to obtain more precise data. Several requests can be sent further sources, e. g. to network equipments, to collect such more precise data. Some calls can be intercepted to retrieve such more precise data for example. And the contents of the intercepted calls or the contents of received information from further sources can be analyzed. By obtaining this data and analysis of this data the situation can be analyzed and decided if a situation is potentially critical. Examples of reactions to be taken in a potential critical situation can be to alert one or more emergency centers, to inform administrations e.g. public administrations or companies of potential risks or to inform all end users which are near the location of the emergency call. The end users being close to the location of the emergency call could for example be prevented to go even closer to the location.

The invention can enable well-adjusted automatic and continuous reactions with respect to specific critical situations or contexts. It is even possible to anticipate further potential conflicts or accidents. For this use data that is already present in the telecommunication networks is used. This data about users and about the global environment of the telecommunication networks can be useful in this context. Most of this data is distributed through several network equipments and platform services. The inventive method collects this data manages it intelligently and aggregates it with further data and finally uses it for personal and/or global security aims.

In a preferred embodiment of the invention the inventive method is implemented in a new logical network plane of the telecommunication network, this new logical network plane for example being called a security plane. In general every telecommunication network comprises three planes. First the control plane is a part of the network that carries control information also known as signalling. Second the data plane or user plane is the part of the network that carries the users traffic. Third the management plane is the part of the network that carries the operations and administration traffic required for network management.

The inventive method is able to supply automatic and continuous reactions regarding personal and/or global security using both network end user's data e.g. localization information, private information etc. and also data like ambient and contextual information. The method uses the fact that a lot of relevant information useful for personal and/or global security services is already available in a telecommunication network. Moreover telecommunication networks can provide both static information e.g. name, age, address of an individual or dynamic and real time information such as location information, contextual information etc. All this network-distributed information is correlated using the inventive method with preferably secure communication protocols. Preferably the method is implemented in a logical network security plane. Said security plane is a fourth plane implemented in a telecommunication network. It exists in addition to said control plane said data plane or user plane and to said management plane.

According to another aspect of the invention a network agent in a telecommunication network provides additional information relating to an individual making an emergency call in the telecommunication network and/or relating to the location of an emergency call in the telecommunication network. Said emergency call is being routed through said telecommunication network and the network agent provides additional information to be aggregated with the call routing and call identification information.

In a preferred embodiment of the invention said network agent can be implemented in the security plane presented above.

According to another aspect of the invention a secure equipment in a telecommunication network performs the method described above.

A secure equipment is a network equipment with a trusted computing environment. The trusted computing environment provides secure storage of code and data provides secure execution of processes.

In a preferred embodiment of the invention said secure equipment is located in the logical network security plane presented above. The logical network security plane can be implemented in various telecommunication network architectures e.g. fixed or mobile architectures. Said server performs personal security data collection. The data collection is preferably performed by interacting with other access and core network equipments like e.g. a Mobile Switching Center (MSC), a Home Location Register (HLR), an authentication server, a privacy server, various data bases, etc. The server combines said data collected with reaction policies, which provide global automatic reactions for personal, or global security purposes. Additionally or alternatively reactions can be presented to an operator for manual selection of manual reactions to the emergency call.

According to a preferred embodiment of the inventive method the process of personal security management can be structured in the following steps, first determination of the type of emergency situation and of the specific data to be collected according to a possible reaction policy, second collection of the further data in exchange with network equipments, third analysis and treatment of the data, fourth automatic reaction and/or proposals of reaction presented to an operator, five return of experience. The fifth step presents a self-learning function to define new reactions or to improve existing reaction policies. The steps mentioned above are preferably implemented in the secure equipment in the telecommunication network presented above. The return of experience step for example can be implemented in a self-learning module in the secure equipment.

### BRIEF DESCRIPTION OF THE DRAWINGS

Other characteristics and advantages of the invention will become apparent in the following detailed description of preferred embodiments of the invention illustrated by the accompanying drawings, given by way of none limiting illustration. The same reference numerals may be used in different drawings to identify the same or similar elements.
- Figure 1: shows an overview of a telecommunication network implementing the inventive method and comprising the inventive secure equipment and network agent,
- Figure 2: shows a schematic overview of the internal architecture of the secure equipment and
- Figure 3: shows a schematic overview of processing of an emergency call according to the inventive method.

### DETAILED DESCRIPTION OF THE INVENTION

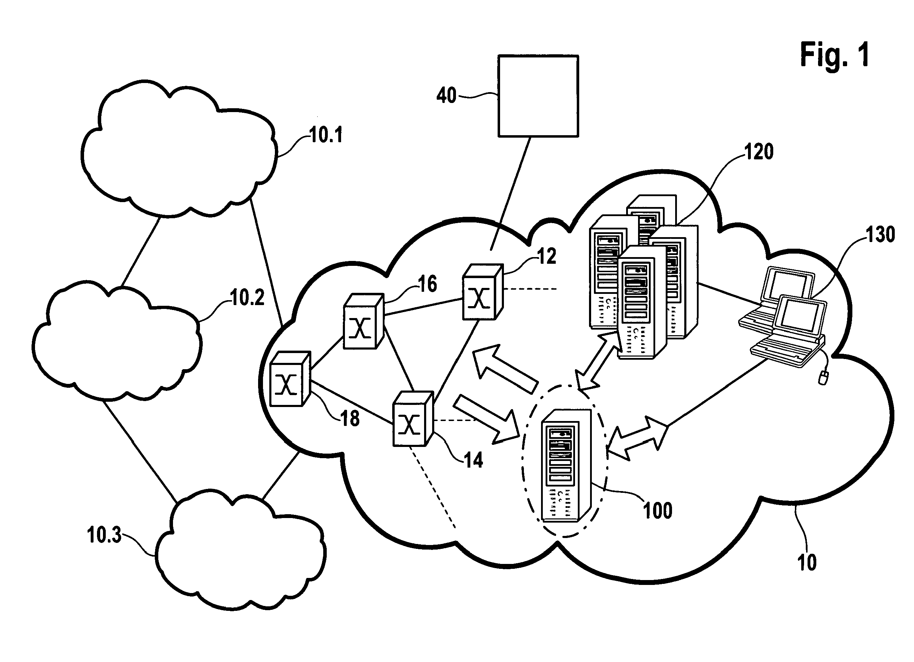

Figure 1 shows a schematic overview of an example of a telecommunication network 10 in which an example of the inventive method is implemented. The telecommunication network 10 is connected to other telecommunication networks 10.1, 10.2 and 10.3. Connected to the telecommunication network 10 is an emergency center 40. The telecommunication network 10 comprises a secure equipment 100 which can exchange data with operator application servers and databases 120 and operator network management systems 130. The secure equipment 100 can be a secure equipment dedicated to the purpose of executing emergency calls or a secure equipment also used for other security sensitive tasks in the telecommunication network.

The secure equipment 100 is also able to exchange data with network equipments 12, 14, 16 and 18. Network equipments are for example MSCs, HLRs, authentication servers, privacy servers or any databases in a telecommunication network 10. The invention uses the fact that a lot of relevant information useful for personal and/or global security services is available in a telecommunication network 10 and/or neighboring telecommunication networks 10.1, 10.2 or 10.3. The telecommunication network 10 can also be connected to other networks, which are not in the same domain e.g. an electrical network.

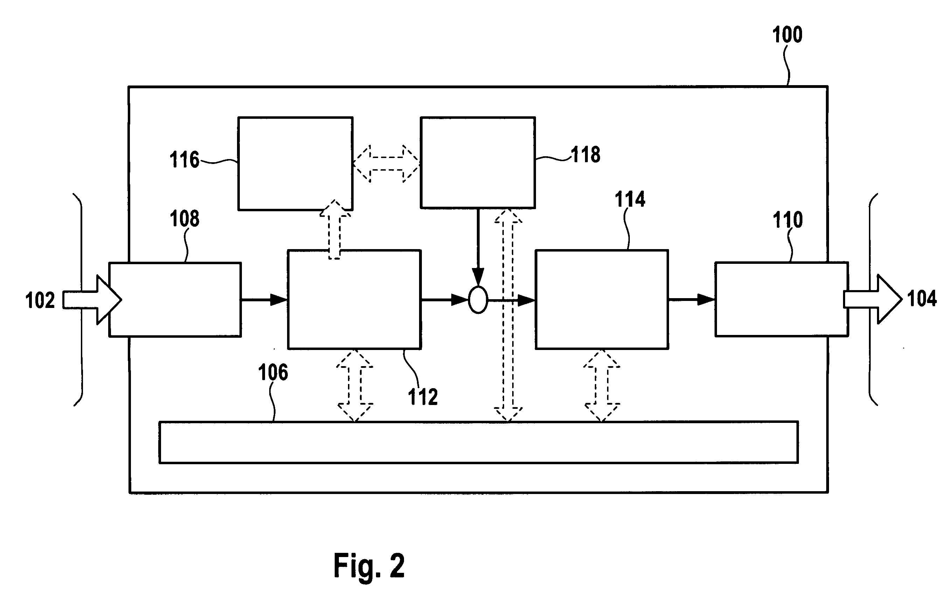

Figure 2 shows a schematic overview of the internal technical architecture of a secure equipment 100. The internal technical architecture of the secure equipment 100 comprises an input 102 from a telecommunication network and an output 104 to the telecommunication network. The secure equipment 100 further comprises a reception module 108, a transmission module 110, a secure equipment internal network communication interface 106, a data analysis module 112, a self learning module 116, a reaction policy module 118, an automatic reaction module 114. The internal network communication interface 106 is preferably implemented as a bus to provide an interface and internal communication with other internal modules of the secure equipment. The modules in the secure equipment 100 are preferably adapted to their use in a telecommunication network to ensure high availability and scalability. In a preferred embodiment of the invention, specific hardware and software adapted to telecommunication architecture is used.

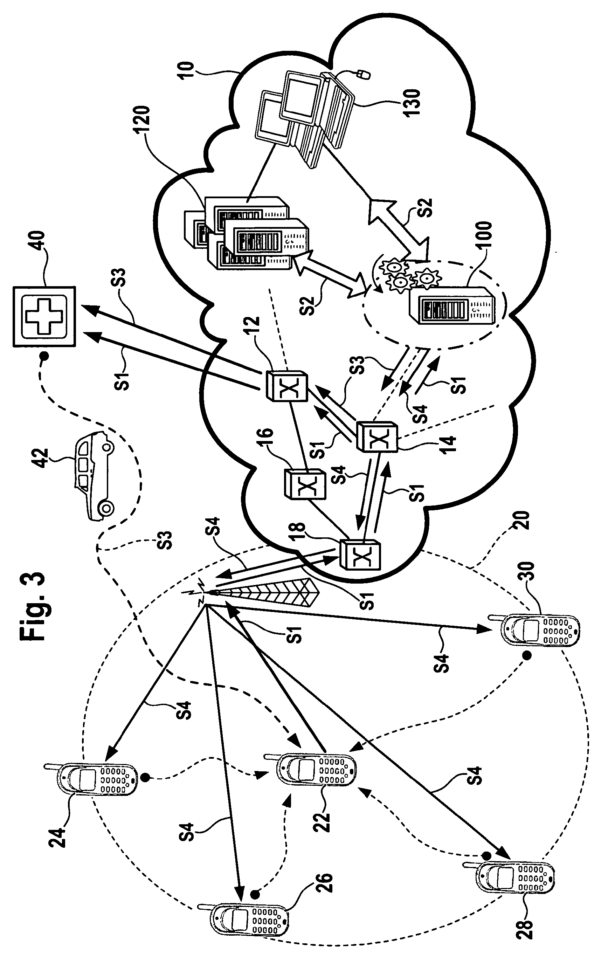

In Fig. 3 an example of an emergency situation is shown which can be handled by the inventive method or the inventive secure equipment or the inventive network agent. In step S1 a person 22 sends out a distress call to an emergency center e.g. by calling the 112 phone number as an emergency number. The person 22 will in the following also be referred to as victim 22 or caller 22. During step S1 the call is routed to an emergency center 40. It is additionally directed towards the secure equipment 100 of the operator of the telecommunication network 10 where the method is implemented. The secure equipment 100 preferably forms part of a network security plane.

In step S2 the secure equipment 100 receives and filters the emergency call. It localizes the caller's 22 position for example by exchanging information with the MSC of a mobile network. During this step, the caller 22 may also be localized by a person of the emergency center 40 talking to the caller 22 over a voice connection.

In step S3 additional information is given to the destination of the call in this example to the emergency center where the call was routed to in the first place. For different reasons e.g. distress, loss of consciousness, mobile equipment out of service etc. it is possible that the victim 22 cannot talk over his mobile equipment to the service center. In this case one of the reaction policies can be useful according to which the secure equipment 100 reacts automatically by taking over the victim 22 call and sending automatically to the emergency center 40 the position of the victim 22and private information of the victim 22 that the operator of the telecommunication network owns e.g. name, birthday etc. This additional personal information and additional location information is retrieved by exchanging information with the operator application service and data bases 120, the operator network management system 130 and/or the network equipments 12, 14, 16 and/or 18.

The emergency center can send as a reaction for example an ambulance 42 to the location of the victim 22.

The secure equipment 100 also determines based on the additional personal information and the additional location information if further information is to be retrieved in the telecommunication network.

In step S4 the secure equipment 100 acts according to the further information retrieved in the network. The further information could for example be a list of persons who are near the victim 22 and who could intervene very rapidly. The secure equipment 100 calls one of several persons of this list e.g. the persons 24, 26, 28 or 30 and automatically guides these persons by using voice messages, electronic vocal messages and/or electronic data messages e.g. SMS to the victim 22.

In step S5 the secure equipment 100 could also store the entire distress call together with ambient sound data for later investigations to determine possible reasons of the emergency call. The storage of the entire distress call can be within the secure equipment 100 or also in the operator application server and data basis 120.

Another exemplary embodiment of the invention is given if the secure equipment 100 is informed in a step S1 about abnormal call peaks. Abnormal call peaks would for example be an unusual high number of calls originating from a defined location. The defined location could for example be the originating location of the emergency call. The secure equipment 100 is informed about an abnormal number of calls for example by polling the surrounding mobile equipments 30, 28, 26 and 24 of the person in distress 22 or by receiving additional information from the network management elements combining additional personal information and additional location information.

The secure equipment 100 launches automatically a process to determine if these abnormal call peaks in a network are the consequence of a critical situation. It is decided if further information e.g. more precise data is required. In this case the secure equipment 100 can send several requests to network equipments 12, 14, 16 or 18. It can also intercept some calls close to the location of the emergency call and analyze their contents. The server 100 can also receive information from external sources e.g. networks 10.1, 10.2 or 10.3 etc.

In step S3 if the situation is considered as potentially critical then the secure equipment 100 can launch different action according to defined reaction policies stored in the reaction policy module 118.

In step S4 the actions defined in the reaction policies are taken. Possible actions are to alert emergency centers 40 to send out ambulances for example and to warn public administrations or companies of potential risks or to warn all end users 24, 26, 28, 30 near the individual 22 having placed emergency calls to avoid going closer to the location of the emergency call to avoid cascading effects.

An advantage of the invention is to have a personal security data management method that allows a proper reaction in case of a critical situation. It is possible to set off automatic reactions according to reaction policies. The reaction policies are advantageously self-learning. This method can be used as a basis for the functional architecture of a new security plane in the telecommunication network 10 to provide new high value without substantial supplementary costs for the operator of the telecommunication network 10. Concerning the end users point of view they do not need to have a specific terminal. The method can be implemented using a fixed access network or a mobile radio network or any other telecommunication network.

The presented method of personal security management could be integrated in all security architectures to for example accelerate the decision making process in many critical situations like terrorisms, attacks, natural disasters etc. They can support emergency management activities and participate to global security activities. Highly private data that is managed inside the security plane can be protected by the use of security measures like encryption and decryption measures.

The presented invention can also be used to manage security through interconnected networks. It can be used not only in different telecommunication networks but also in different networks that are connected but not in the same domain e.g. electrical networks and telecommunication networks.

## Claims

1. Method of processing an emergency call in a telecommunication network (10), comprising the steps of
retrieving call routing and call identification information,
retrieving additional personal information relating to the individual presumably having initiated the emergency call,
retrieving additional location information relating to the originating location of the emergency call,
routing the call using the retrieved call routing and call identification information, and
providing the additional information to the routing destination (40) of the routed call.

2. Method according to claim 1, further comprising the step of
analyzing said additional personal information and said additional location information and
deciding on any further action to be taken in the telecommunication network (10).

3. Method according to claim 2, whereas
said action to be taken is intercepting one or more calls relating to said individual presumably having initiated the emergency call or relating to said originating location of the emergency call.

4. Method according to claim 2 or 3, whereas
said action to be taken is informing users (24, 26, 28, 30) of the telecommunication network who are in a defined relation to the location of the emergency call, e. g. near the location of the emergency call.

5. Method according to claim 2, 3 or 4, whereas
said action to be taken is storing the entire emergency call, the stored data comprising ambient sound data.

6. Method according to one of the claims 1 to 5, further comprising the steps of
analyzing said call routing and call identification information, analyzing said additional personal information and said additional location information and
deciding on which further information to retrieve, said further information relating to the individual presumably having initiated the emergency call and/or to the originating location of the call.

7. Network agent (120) in a telecommunication network (10), an emergency call being routed in said telecommunication network (10) using call routing and call identification information, said network agent (120) providing additional information relating to the individual making the emergency call and relating to the location of the call.

8. Secure equipment (100) in a telecommunication network (10) performing the method of one of the claims 1 to 6.

9. Telecommunication network (10) comprising a secure equipment (100) according to claim 8.

## Amended claims

### Amended claims in accordance with Rule 137(2) EPC.

**1.** Method of processing an emergency call in a telecommunication network (10), comprising the steps of
retrieving coll routing and call identification information,
retrieving additional personal information relating to the individual (22) presumably having initiated the emergency call,
retrieving additional location information relating to the originating location of the emergency call,
routing the call using the retrieved call routing and call identification information,
providing the additional information to the routing destination (40) of the routed call,
**characterized by the steps of**
analyzing said additional personal information and said additional location information,
deciding on any further action to be taken in the telecommunication network (10), where
said action to be taken is intercepting one or more calls relating to said individual (22) presumably having initiated the emergency call or relating to said originating location of the emergency call.

**2.** Method according to claim 1, whereas
said action to be taken is informing users (24, 26, 28, 30) of the telecommunication network who are in a defined relation to the location of the emergency call, e. g. near the location of the emergency call.

**3.** Method according to claim 2, whereas
said action to be taken is storing the entire emergency call, the stored data comprising ambient sound data.

**4.** Method according to one of the claims 1 to 3, further comprising the steps of
analyzing said call routing and call identification information,
analyzing said additional personal information and said additional location information and
deciding on which further information to retrieve, said further information relating to the individual presumably having initiated the emergency call and/or to the originating location of the call.

**5.** Secure equipment (100) in a telecommunication network (10) performing the method of one of the claims 1 to 4.

**6.** Telecommunication network (10) comprising a secure equipment (100) according to claim 5.

**7.** Telecommunication network (10) according to claim 6, further comprising a network agent (120), said network agent (120) providing additional information relating to the individual making the emergency call and relating to the location of the call.
